# EUROPEAN PATENT APPLICATION

(11) **EP 4 693 501 A1**
(43) Date of publication of application: **11.02.2026**
(21) Application number: 23929312.9
(22) Date of filing: 30.03.2023
(51) Int. Cl.: H01M 4/62, H01M 4/38, H01M 4/134

(54) **NEGATIVE ELECTRODE MATERIAL AND PREPARATION METHOD THEREFOR, ELECTROCHEMICAL DEVICE, AND ELECTRONIC DEVICE**

(71) Applicant: NingDe Amperex Technology Limited, Ningde City, Fujian 352100 (CN)
(72) Inventor: REN, Wenchen, Ningde, Fujian 352100 (CN); ZHANG, Lijuan, Ningde, Fujian 352100 (CN); CUI, Hang, Ningde, Fujian 352100 (CN); SU, Yisong, Ningde, Fujian 352100 (CN)
(74) Representative: Kraus & Lederer PartGmbB
(86) International application number: PCT/CN2023/085140
(87) International publication number: WO 2024/197715

(57) **Abstract**

This application provides a negative electrode material, a preparation method thereof, an electrochemical device, and an electronic device, where the negative electrode material includes porous silicon-carbon particles. The porous silicon-carbon particle includes a porous carbon matrix, a first silicon carbide layer located on an inner wall surface of pores of the porous carbon matrix, and a first silicon particle layer located on a side surface of the first silicon carbide layer facing away from the inner wall surface. The porous carbon matrix, the first silicon carbide layer, and the first silicon particle layer are connected through Si-C covalent bonds. The negative electrode material of this application can enhance a bonding force between silicon particles and the porous carbon matrix and prevent detachment of silicon particles, thereby enabling formation of a relatively stable solid electrolyte interphase (SEI) between the negative electrode material and an electrolyte, realizing low irreversible capacity loss during a first charge-discharge cycle and insignificant capacity degradation, and significantly improving cycling performance and safety performance.

## Description

### TECHNICAL FIELD

This application relates to the field of batteries, and specifically relates to a negative electrode material, a preparation method thereof, an electrochemical device, and an electronic device.

### BACKGROUND

With the continuous increase in power of electric equipment such as mobile phones, computers, electric tools, and electric vehicles, increasingly high requirements are also imposed on energy density of lithium-ion batteries. Currently, the energy density of batteries can be improved by incorporating silicon-based negative electrode materials into the negative electrode active materials. However, the high volume expansion rate (approximately 320%) and high surface activity of silicon-based negative electrode materials after lithium intercalation limit the widespread adoption and popularity of such batteries. Additionally, cracking of silicon-based negative electrode materials after expansion introduces new electrolyte/active material interfaces, continuously consuming electrolyte to form a solid electrolyte interphase (SEI) film, which easily leads to rapid capacity degradation of batteries.

To address the issue of cycling stability in silicon-based negative electrode materials, it has been proposed to embed nano-silicon within porous carbon materials to reduce the expansion and associated side reactions of silicon-based negative electrode materials. In such structures, the pores of the carbon material can provide buffer space for the expansion of nano-silicon, and the framework of the carbon material can isolate nano-silicon from the electrolyte, thereby preventing side reactions. However, nano-silicon is bound to a carbon surface within the porous carbon through van der Waals force, resulting in weak interaction therebetween. During charging and discharging, nano-silicon undergoes volume expansion/contraction, and after multiple cycles, silicon particles may detach from the carbon surface, deteriorating the cycling stability of the silicon-based negative electrode material.

Therefore, there is an urgent need to develop silicon-based negative electrode materials capable of achieving stable cycling.

### SUMMARY

To address the deficiencies of the prior art, this application provides a negative electrode material, a preparation method thereof, an electrochemical device, and an electronic device.

A first aspect of this application provides a negative electrode material including porous silicon-carbon particles, where the porous silicon-carbon particle includes a porous carbon matrix, a first silicon carbide layer located on an inner wall surface of pores of the porous carbon matrix, and a first silicon particle layer located on a side surface of the first silicon carbide layer facing away from the inner wall surface. The porous carbon matrix, the first silicon carbide layer, and the first silicon particle layer are connected through Si-C covalent bonds.

Optionally, the porous silicon-carbon particle satisfies at least one of the following conditions: (a) based on a weight of the porous silicon-carbon particle, a mass fraction of silicon element ranges from 32 wt% to 60 wt%; or (b) in an X-ray diffraction pattern of the porous silicon-carbon particles, a peak intensity I₁ of a diffraction peak of silicon carbide at 20 of 35.6° ± 0.5° and a peak intensity I₂ of a diffraction peak of silicon at 20 of 28.5° ± 0.5° satisfy a mathematical relationship: 0.025 < I₁/I₂ < 0.47.

Optionally, the porous silicon-carbon particle further satisfies at least one of the following conditions: (c) a pore volume of the pores of the porous carbon matrix ranges from 0.6 cm³/g to 1.1 cm³/g; or (d) a volume proportion of micropores in the pores of the porous carbon matrix is greater than or equal to 70%, where the micropores are pores with a diameter less than 2 nm.

Optionally, the porous silicon-carbon particle further satisfies at least one of the following conditions: (e) a volume distribution of the porous silicon-carbon particle satisfies that Dᵥ50 ranges from 5 µm to 8 µm and Dᵥ99 ranges from 15 µm to 20 µm, and a number distribution of the porous silicon-carbon particle satisfies that Dₙ10 ranges from 0.5 µm to 1 µm; or (f) a specific surface area of the porous silicon-carbon particles ranges from 0.5 m²/g to 12 m²/g.

Optionally, the porous silicon-carbon particle further satisfies at least one of the following conditions: (g) the porous silicon-carbon particle further includes a second silicon carbide layer located on an outer surface of the porous silicon-carbon and a second silicon particle layer located on a side surface of the second silicon carbide layer facing away from the outer surface, where the porous carbon matrix, the second silicon carbide layer, and the second silicon particle layer are connected through Si-C covalent bonds; (h) the porous silicon-carbon particle further includes a carbon particle coating layer, where the carbon particle coating layer covers the second silicon carbide layer and the second silicon particle layer located on the side surface of the second silicon carbide layer facing away from the outer surface; (i) a thickness of the carbon particle coating layer ranges from 2 nm to 20 nm; or (j) based on a weight of the porous silicon-carbon particles, a mass fraction of the carbon particle coating layer ranges from 1.3 wt% to 3.2 wt%.

A second aspect of this application provides an electrochemical device, where the electrochemical device includes the negative electrode material described above.

Optionally, the negative electrode material satisfies at least one of the following conditions: (k) a compacted density of the negative electrode material ranges from 0.85 g/cm³ to 1.15 g/cm³; (l) an initial porosity of the negative electrode material ranges from 24.7% to 26.1%; or (m) a porosity of the negative electrode material after 500 cycles ranges from 26.4% to 34.5%.

A third aspect of this application provides an electronic device, where the electronic device includes the electrochemical device described above.

A fourth aspect of this application provides a preparation method of a negative electrode material, for forming the negative electrode material described above. The preparation method includes the following steps: step 1: providing a porous carbon matrix, and forming a first silicon carbide layer on an inner wall surface of pores of the porous carbon matrix; and step 2: forming a first silicon particle layer on a side surface of the first silicon carbide layer facing away from the porous carbon matrix, where the porous carbon matrix, the first silicon carbide layer, and the first silicon particle layer are connected through Si-C covalent bonds.

Optionally, in step 1, the forming a first silicon carbide layer on an inner wall surface of pores of the porous carbon matrix includes the following steps: step a: adding the porous carbon matrix to a fluidized bed, introducing a protective gas to bring the porous carbon matrix to a fluidized state, heating the fluidized bed to a pretreatment temperature, and then introducing a first silicon source gas so that the first silicon source gas is thermally cracked to form silicon particles deposited on the inner wall surface of the pores of the porous carbon matrix, thereby forming the silicon particles; and step b: performing a first heating treatment on the porous carbon matrix and the silicon particles to cause the silicon particles to react with the porous carbon matrix to form silicon carbide, so as to form the first silicon carbide layer on the inner wall surface of the pores of the porous carbon matrix.

Optionally, in step a, the pretreatment temperature ranges from 450°C to 500°C; the protective gas includes nitrogen; a flow velocity of the protective gas ranges from 5 L/min to 20 L/min; the first silicon source gas includes at least one of monosilane, disilane, or trisilane; and a flow velocity of the first silicon source gas ranges from 1 L/min to 5 L/min.

Optionally, in step a, a duration of introducing the first silicon source gas ranges from 1 min to 10 min; and in step b, a temperature of the first heating treatment ranges from 550°C to 1000°C, and a duration ranges from 10 min to 2 h.

Optionally, in step a, a duration of introducing the first silicon source gas ranges from 60 min to 300 min; and in step b, a temperature of the first heating treatment ranges from 550°C to 650°C, and a duration ranges from 10 min to 2 h.

Optionally, in step 1, the forming a first silicon carbide layer on an inner wall surface of pores of the porous carbon matrix includes the following step: step c: immersing the porous carbon matrix in a silicon-containing solution to allow the porous carbon matrix to adsorb the silicon-containing solution, then performing a drying treatment on the porous carbon matrix after adsorption to remove a solvent, and after the drying treatment, performing a calcination treatment on the porous carbon matrix to form the first silicon carbide layer on the inner wall surface of the pores of the porous carbon matrix.

Optionally, a solute of the silicon-containing solution includes silicon-containing molecules soluble in an organic solvent, such as dimethyl dimethoxysilane, methyl trimethoxysilane, tetramethoxysilane, or methyl triethoxysilane, a solvent of the silicon-containing solution includes organic solvents such as ethanol, methanol, isopropanol, acetone, or tetrahydrofuran, a duration of the immersion ranges from 2 h to 10 h, a temperature of the calcination treatment ranges from 700°C to 1200°C, and a duration of the calcination ranges from 1 h to 3 h.

Optionally, step 2 includes the following steps: placing the porous carbon matrix processed in step 1 in a fluidized bed, heating the fluidized bed to a post-treatment temperature, and introducing a second silicon source gas so that the second silicon source gas is thermally cracked to form silicon particles deposited on a side surface of the first silicon carbide layer facing away from the porous carbon matrix to form the first silicon particle layer.

Optionally, the post-treatment temperature ranges from 450°C to 500°C, a flow velocity of the second silicon source gas ranges from 1 L/min to 5 L/min, a duration of introducing the second silicon source gas ranges from 20 min to 360 min, and the second silicon source gas includes at least one of monosilane, disilane, or trisilane.

Optionally, step 1 further includes forming a second silicon carbide layer on an outer surface of the porous carbon matrix, where the second silicon carbide layer and the first silicon carbide layer are formed simultaneously based on the same method; and step 2 further includes forming a second silicon particle layer on a side surface of the second silicon carbide layer facing away from the porous carbon matrix, where the first silicon particle layer and the second silicon particle layer are formed simultaneously based on the same method. The preparation method further includes: step 3, forming a carbon particle coating layer, where the carbon particle coating layer covers the second silicon carbide layer and the second silicon particle layer. The step of forming the carbon particle coating layer includes the following steps: after step 2, heating the fluidized bed to a temperature ranging from 500°C to 650°C, and introducing a carbon source gas to thermally crack the carbon source gas to form carbon particles deposited on the second silicon carbide layer and a side surface of the second silicon particle layer facing away from the porous carbon matrix; where a flow velocity of the carbon source gas ranges from 0.5 L/min to 6 L/min, a duration of introducing the carbon source gas ranges from 60 min to 360 min; and the carbon source gas includes at least one of acetylene, ethylene, propylene, propane, or methane.

The technical solution of this application has the following beneficial effects.

The negative electrode material of this application is sequentially provided with the first silicon carbide layer and the first silicon particle layer on the inner wall surface of the pores of the porous carbon matrix, where the porous carbon matrix, the first silicon carbide layer, and the first silicon particle layer are connected through Si-C covalent bonds, enabling the porous carbon matrix to provide accommodation space for the expansion of silicon particles as well as restrict the volume of the silicon particles to avoid excessive expansion of the silicon particles. Additionally, the porous carbon matrix, the first silicon carbide layer, and the first silicon particle layer are connected through Si-C covalent bonds, preventing detachment of the first silicon carbide layer and the first silicon particle layer from the pores of the porous carbon matrix, thereby forming a stable structure. Consequently, a relatively stable solid electrolyte interphase (SEI) can be formed between the negative electrode material of this application and an electrolyte, realizing low irreversible capacity loss during a first charge-discharge cycle and insignificant capacity degradation, and significantly improving cycling performance and safety performance.

### BRIEF DESCRIPTION OF DRAWINGS

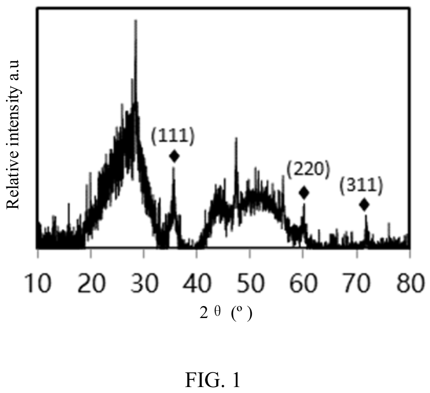

FIG. 1 exemplarily shows an X-ray diffraction pattern of a negative electrode material of this application.

### DETAILED DESCRIPTION

This application is further described below in conjunction with specific embodiments. It should be understood that these specific embodiments are only used to illustrate this application and are not intended to limit the scope of this application.

### I. Negative electrode material

One or more embodiments of this application provide a negative electrode material including porous silicon-carbon particles, where the porous silicon-carbon particle includes a porous carbon matrix, a first silicon carbide layer located on an inner wall surface of pores of the porous carbon matrix, and a first silicon particle layer located on a side surface of the first silicon carbide layer facing away from the inner wall surface. The porous carbon matrix, the first silicon carbide layer, and the first silicon particle layer are connected through Si-C covalent bonds.

The negative electrode material of this application is sequentially provided with the first silicon carbide layer and the first silicon particle layer on the inner wall surface of the pores of a porous carbon matrix, where the porous carbon matrix, the first silicon carbide layer, and the first silicon particle layer are connected through Si-C covalent bonds, enabling the porous carbon matrix to provide accommodation space for the expansion of silicon particles as well as restrict the volume of the silicon particles to avoid excessive expansion of the silicon particles. Additionally, the porous carbon matrix, the first silicon carbide layer, and the first silicon particle layer are connected through Si-C covalent bonds, preventing detachment of the first silicon carbide layer and the first silicon particle layer from the pores of the porous carbon matrix, thereby forming a stable structure. Consequently, a relatively stable solid electrolyte interphase (SEI) can be formed between the negative electrode material of this application and an electrolyte, realizing low irreversible capacity loss during a first charge-discharge cycle and insignificant capacity degradation, and significantly improving cycling performance and safety performance.

In some embodiments, silicon particles of the first silicon particle layer are amorphous silicon. It can be understood that amorphous silicon exhibits no directional selectivity during lithium intercalation, the same lithium intercalation amount at different angles, uniform stress during expansion, and no particle fragmentation.

In some embodiments, based on a weight of the porous silicon-carbon particle, a mass fraction of silicon element ranges from 32 wt% to 60 wt%. For example, based on the weight of the porous silicon-carbon particle, the mass fraction of silicon element may be 32 wt%, 34 wt%, 36 wt%, 35 wt%, 38 wt%, 40 wt%, 42 wt%, 45 wt%, 46 wt%, 48 wt%, 50 wt%, 52 wt%, 54 wt%, 55 wt%, 56 wt%, 58 wt%, 60 wt%, or a range defined by any two of these values.

It can be understood that if the content of silicon element is too low, the improvement to the negative electrode material is not significant, and if the content of silicon element is too high, a part of silicon element cannot be fixed and thus easily detaches from the porous carbon matrix, leading to structural instability of the negative electrode material. Additionally, silicon element may react strongly with the electrolyte, causing significant volume expansion, which in turn results in large irreversible capacity loss during a first charge-discharge cycle, rapid capacity degradation, and poor cycling performance of a lithium-ion battery. Controlling the content of silicon element within the above range can not only ensure excellent specific capacity of the negative electrode material but also improve the initial coulombic efficiency, cycling performance, and safety performance of the lithium-ion battery.

Referring to FIG. 1, in some embodiments, in an X-ray diffraction pattern of the porous silicon-carbon particle, a peak intensity I₁ of a diffraction peak of silicon carbide at 2θ of 35.6° ± 0.5° and a peak intensity I₂ of a diffraction peak of silicon at 20 of 28.5° ± 0.5° satisfy a mathematical relationship: 0.025 < I₁/I₂ < 0.47.

It can be understood that in the X-ray diffraction pattern of the porous silicon-carbon particle, a distinct characteristic peak of the (111) crystal plane of silicon carbide is present at 35.6° ± 0.5°, confirming the formation of silicon carbide in the porous silicon-carbon particle; and a distinct characteristic peak of the (111) crystal plane of silicon is present at 28.5° ± 0.5°, confirming the presence of elemental silicon in the porous silicon-carbon particle. Additionally, a ratio relationship of the diffraction peak intensity of silicon carbide and the diffraction peak intensity of silicon can reflect their relative contents in the porous silicon-carbon particle. When the relative content of silicon carbide is too high, the irreversible lithium intercalation behavior of a silicon carbide material leads to reduced gram capacity and initial coulombic efficiency of the lithium-ion battery. When the relative content of silicon carbide is too low, it is insufficient to adequately fix the first silicon particle layer, causing silicon particles in the first silicon particle layer to easily detach from the pores of the porous carbon matrix. Due to the high expansion rate and strong surface activity of silicon particles, the reaction between the negative electrode material and the electrolyte intensifies, leading to increased thickness and deteriorated power performance and cycling performance of the lithium-ion battery, as well as risks such as swelling or even explosion. A ratio of the diffraction peak intensity of silicon carbide to the diffraction peak intensity of silicon being within the above range is conducive to improving the overall performance of the ion battery.

Specifically, referring to FIG. 1, in the X-ray diffraction pattern of the porous silicon-carbon particle, distinct diffraction peaks can also be observed at 60° ± 0.5° (corresponding to a characteristic peak of the (220) crystal plane of silicon carbide) and 71.8° ± 0.5° (corresponding to a characteristic peak of the (311) crystal plane of silicon carbide).

In some embodiments, a pore volume of the pores of the porous carbon matrix ranges from 0.6 cm³/g to 1.1 cm³/g. For example, the pore volume of the pores of the porous carbon matrix may be 0.6 cm³/g, 0.7 cm³/g, 0.8 cm³/g, 0.9 cm³/g, 1.0 cm³/g, 1.1 cm³/g, or a range defined by any two of these values.

In some embodiments, a volume proportion of micropores in the pores of the porous carbon matrix is greater than or equal to 70%, where the micropores are pores with a diameter less than 2 nm.

In some embodiments, a volume distribution of the porous silicon-carbon particle satisfies that Dᵥ50 range from 5 µm to 8 µm and Dᵥ99 range from 15 µm to 20 µm; and a number distribution of the porous silicon-carbon particle satisfies that Dₙ10 ranges from 0.5 µm to 1 µm. For example, Dᵥ50 may be 5 µm, 5.5 µm, 6 µm, 6.5 µm, 7 µm, 7.5 µm, 8 µm, or a range defined by any two of these values; Dᵥ99 may be 15 µm, 15.5 µm, 16 µm, 16.5 µm, 17 µm, 17.5 µm, 18 µm, 18.5 µm, 19 µm, 19.5 µm, 20 µm, or a range defined by any two of these values; and Dₙ10 may be 0.5 µm, 0.6 µm, 0.7 µm, 0.8 µm, 0.9 µm, 1 µm, or a range defined by any two of these values.

In some embodiments, a specific surface area of the porous silicon-carbon particle ranges from 0.5 m²/g to 12 m²/g. For example, the specific surface area of the porous carbon particle may be 0.5 m²/g, 1 m²/g, 2 m²/g, 3 m²/g, 4 m²/g, 5 m²/g, 6 m²/g, 7 m²/g, 8 m²/g, 9 m²/g, 10 m²/g, 11 m²/g, 12 m²/g, or a range defined by any two of these values.

In some embodiments, the porous silicon-carbon particle further includes a second silicon carbide layer located on an outer surface of the porous silicon-carbon and a second silicon particle layer located on a side surface of the second silicon carbide layer facing away from the outer surface, where the porous carbon matrix, the second silicon carbide layer, and the second silicon particle layer are connected through Si-C covalent bonds.

It can be understood that the second silicon carbide layer, the second silicon particle layer, and their connection relationship with the porous carbon particles can achieve the same effects as the first silicon carbide layer, the first silicon particle layer, and the connection relationship of the first silicon carbide layer and the first silicon particle layer with the porous carbon particles. This is not described herein again.

In some embodiments, the porous silicon-carbon particle further includes a carbon particle coating layer, where the carbon particle coating layer covers the second silicon carbide layer and the second silicon particle layer located on the side surface of the second silicon carbide layer facing away from the outer surface.

It can be understood that the carbon particle layer has a lithium ion conduction function, and silicon particles in the second silicon particle layer can receive lithium ions passing through the carbon coating layer to form a lithium-silicon alloy, thereby increasing gram capacity.

In some embodiments, carbon particles in the carbon particle coating layer are amorphous carbon. It can be understood that amorphous carbon is conducive to forming a complete coating layer.

In some embodiments, a thickness of the carbon particle coating layer ranges from 2 nm to 20 nm. For example, the thickness of the carbon particle coating layer may be 2 nm, 4 nm, 6 nm, 8 nm, 10 nm, 12 nm, 14 nm, 16 nm, 18 nm, 20 nm, or a range defined by any two of these values.

In some embodiments, based on a weight of the porous silicon-carbon particle, a mass fraction of carbon element ranges from 40 wt% to 68 wt%. For example, based on the weight of the porous silicon-carbon particle, the mass fraction of carbon element may be 40 wt%, 42 wt%, 44 wt%, 46 wt%, 48 wt%, 50 wt%, 52 wt%, 54 wt%, 56 wt%, 58 wt%, 60 wt%, 62 wt%, 64 wt%, 66 wt%, 68 wt%, or a range defined by any two of these values.

In some embodiments, based on a weight of the porous silicon-carbon particle, a mass fraction of the carbon particle coating layer ranges from 1.3 wt% to 3.2 wt%. For example, based on the weight of the porous silicon-carbon particle, the mass fraction of the carbon particle coating layer may be 1.3 wt%, 1.4 wt%, 1.6 wt%, 1.8 wt%, 2.0 wt%, 2.2 wt%, 2.4 wt%, 2.6 wt%, 2.8 wt%, 3.0 wt%, 3.2 wt%, or a range defined by any two of these values.

### II. Preparation method of negative electrode material

One or more embodiments of this application provide a preparation method of a negative electrode material, for forming the negative electrode material described above. The preparation method includes the following steps.

Step 1. Provide a porous carbon matrix, and form a first silicon carbide layer on an inner wall surface of pores of the porous carbon matrix.

Step 2. Form a first silicon particle layer on a side surface of the first silicon carbide layer facing away from the porous carbon matrix, where the porous carbon matrix, the first silicon carbide layer, and the first silicon particle layer are connected through Si-C covalent bonds.

In some embodiments, in step 1, the forming a first silicon carbide layer on an inner wall surface of pores of the porous carbon matrix includes the following steps.

Step a. Add the porous carbon matrix to a fluidized bed, introduce a protective gas to bring the porous carbon matrix to a fluidized state, heat the fluidized bed to a pretreatment temperature, and then introduce a first silicon source gas so that the first silicon source gas is thermally cracked to form silicon particles deposited on the inner wall surface of the pores of the porous carbon matrix, thereby forming the silicon particles.

Step b. Perform a first heating treatment on the porous carbon matrix and the silicon particles to cause the silicon particles to react with the porous carbon matrix to form silicon carbide, so as to form the first silicon carbide layer on the inner wall surface of the pores of the porous carbon matrix.

In some embodiments, in step a, the pretreatment temperature ranges from 450°C to 500°C; the protective gas includes nitrogen; a flow velocity of the protective gas ranges from 5 L/min to 20 L/min; the first silicon source gas includes at least one of monosilane, disilane, or trisilane; and a flow velocity of the first silicon source gas ranges from 1 L/min to 5 L/min.

In some embodiments, in step a, a duration of introducing the first silicon source gas ranges from 1 min to 10 min; and in step b, a temperature of the first heating treatment ranges from 550°C to 1000°C, and a duration ranges from 10 min to 2 h.

In some embodiments, in step a, a duration of introducing the first silicon source gas ranges from 60 min to 300 min; and in step b, a temperature of the first heating treatment ranges from 550°C to 650°C, and a duration ranges from 10 min to 2 h.

In some embodiments, in step 1, the forming a first silicon carbide layer on an inner wall surface of pores of the porous carbon matrix includes the following step. Step c. Immerse the porous carbon matrix in a silicon-containing solution to allow the porous carbon matrix to adsorb the silicon-containing solution, then perform a drying treatment on the porous carbon matrix after adsorption to remove a solvent, and after the drying treatment, perform a calcination treatment on the porous carbon matrix to form the first silicon carbide layer on the inner wall surface of the pores of the porous carbon matrix.

In some embodiments, a solute of the silicon-containing solution includes but is not limited to silicon-containing molecules soluble in an organic solvent, such as dimethyl dimethoxysilane, methyl trimethoxysilane, tetramethoxysilane, or methyl triethoxysilane; a solvent of the silicon-containing solution includes organic solvents such as ethanol, methanol, isopropanol, acetone, or tetrahydrofuran; a duration of the immersion ranges from 2 h to 10 h; a temperature of the calcination treatment ranges from 700°C to 1200°C; and a duration of the calcination ranges from 1 h to 3 h.

In some embodiments, step 2 includes the following steps: place the porous carbon matrix processed in step 1 in a fluidized bed, heat the fluidized bed to a post-treatment temperature, and introduce a second silicon source gas so that the second silicon source gas is thermally cracked to form silicon particles deposited on a side surface of the first silicon carbide layer facing away from the porous carbon matrix, to form the first silicon particle layer.

In some embodiments, the post-treatment temperature ranges from 450°C to 500°C; a flow velocity of the second silicon source gas ranges from 1 L/min to 5 L/min; a duration of introducing the second silicon source gas ranges from 20 min to 360 min; and the second silicon source gas includes at least one of monosilane, disilane, or trisilane.

In some embodiments, step 1 further includes forming a second silicon carbide layer on an outer surface of the porous carbon matrix, where the second silicon carbide layer and the first silicon carbide layer are formed simultaneously based on the same method; and step 2 further includes forming a second silicon particle layer on a side surface of the second silicon carbide layer facing away from the porous carbon matrix, where the first silicon particle layer and the second silicon particle layer are formed simultaneously based on the same method. The preparation method further includes the following steps. Step 3. Form a carbon particle coating layer, where the carbon particle coating layer covers the second silicon carbide layer and the second silicon particle layer.

In some embodiments, the forming a carbon particle coating layer includes the following steps. After step 2, heat the fluidized bed to a temperature ranging from 500°C to 650°C, introduce a carbon source gas to thermally crack the carbon source gas to form carbon particles deposited on a side surface of the second silicon carbide layer and the second silicon particle layer facing away from the porous carbon matrix; where a flow velocity of the carbon source gas ranges from 0.5 L/min to 6 L/min, a duration of introducing the carbon source gas ranges from 60 min to 360 min, and the carbon source gas includes at least one of acetylene, ethylene, propylene, propane, or methane. Specifically, a thermal cracking reaction equation is CₓH_{y} = xC + y/2H₂.

In a specific example of this application, a porous carbon matrix is added to a fluidized bed, nitrogen is introduced at a flow velocity ranging from 5 L/min to 20 L/min to bring the porous carbon matrix to a fluidized state, and the fluidized bed is heated to a temperature ranging from 450°C to 500°C. After the temperature is stable, a first silicon source gas is introduced for a duration ranging from 1 min to 10 min, and the first silicon source gas is thermally cracked to form silicon particles deposited on an inner wall surface of pores of the porous carbon matrix or an outer surface of the porous carbon matrix. Subsequently, the fluidized bed is heated to a temperature ranging from 550°C to 1000°C for a duration ranging from 10 min to 2 h to cause the silicon particles to react with the porous carbon matrix to form silicon carbide, so as to form a first silicon carbide layer on the inner wall surface of the pores of the porous carbon matrix and/or form a second silicon carbide layer on the outer surface of the porous carbon matrix. The fluidized bed is cooled to a temperature ranging from 450°C to 500°C, a second silicon source gas is introduced at a flow velocity ranging from 1 L/min to 5 L/min for a duration ranging from 20 min to 360 min, and the second silicon source gas is thermally cracked to form silicon particles deposited on a surface of the second silicon carbide. Subsequently, the fluidized bed is heated to a temperature ranging from 500°C to 650°C, and a carbon source gas is introduced so that the carbon source gas is thermally cracked to form carbon particles deposited on a side surface of the second silicon carbide layer and the second silicon particle layer facing away from the porous carbon matrix, where a flow velocity of the carbon source gas ranges from 0.5 L/min to 6 L/min, a duration of introducing the carbon source gas ranges from 60 min to 360 min, and a carbon particle coating layer is formed. The carbon particle coating layer covers the second silicon carbide and silicon particles located on a surface of the second silicon carbide.

In another specific example of this application, a porous carbon matrix is added to a fluidized bed, nitrogen is introduced at a flow velocity ranging from 5 L/min to 20 L/min to bring the porous carbon matrix to a fluidized state, and the fluidized bed is heated to a temperature ranging from 450°C to 500°C. After the temperature is stable, a first silicon source gas is introduced for a duration ranging from 1 min to 10 min, and the first silicon source gas is thermally cracked to form silicon particles deposited on an inner wall surface of pores of the porous carbon matrix or an outer surface of the porous carbon matrix. Subsequently, the fluidized bed is heated to a temperature ranging from 550°C to 650°C for a duration ranging from 10 min to 2 h to cause the silicon particles to react with the porous carbon matrix to form silicon carbide, so as to form a first silicon carbide layer on the inner wall surface of the pores of the porous carbon matrix and/or form a second silicon carbide layer on the outer surface of the porous carbon matrix. The fluidized bed is cooled to a temperature ranging from 450°C to 500°C, and a second silicon source gas is introduced at a flow velocity ranging from 1 L/min to 5 L/min for a duration ranging from 20 min to 360 min, and the second silicon source gas is thermally cracked to form silicon particles deposited on a surface of the second silicon carbide layer. Subsequently, the fluidized bed is heated to a temperature ranging from 500°C to 650°C, and a carbon source gas is introduced so that the carbon source gas is thermally cracked to form carbon particles deposited on a side surface of the second silicon carbide layer and the second silicon particle layer facing away from the porous carbon matrix, where a flow velocity of the carbon source gas ranges from 0.5 L/min to 6 L/min, a duration of introducing the carbon source gas ranges from 60 min to 360 min, and a carbon particle coating layer is formed. The carbon particle coating layer covers the second silicon carbide and silicon particles located on a surface of the second silicon carbide.

In yet another specific example of this application, a porous carbon matrix is immersed in a silicon-containing solution to allow the porous carbon matrix to adsorb the silicon-containing solution for an immersion time ranging from 2 h to 10 h, then a drying treatment is performed on the porous carbon matrix after adsorption to remove a solvent, and after the drying treatment, a calcination treatment is performed on the porous carbon matrix to form a first silicon carbide layer on an inner wall surface of pores of the porous carbon matrix, and/or a second silicon carbide layer on an outer surface of the porous carbon matrix, where a temperature of the calcination treatment ranges from 700°C to 1200°C, and a duration of the calcination ranges from 1 h to 3 h. Subsequently, the porous carbon matrix is cooled to room temperature, the processed porous carbon matrix is placed in a fluidized bed, the fluidized bed is heated to a temperature ranging from 500°C to 650°C, and a carbon source gas is introduced so that the carbon source gas is thermally cracked to form carbon particles deposited on a side surface of the second silicon carbide layer and the second silicon particle layer facing away from the porous carbon matrix, where a flow velocity of the carbon source gas ranges from 0.5 L/min to 6 L/min, a duration of introducing the carbon source gas ranges from 60 min to 360 min, and a carbon particle coating layer is formed. The carbon particle coating layer covers the second silicon carbide and silicon particles located on a surface of the second silicon carbide.

### III. Electrochemical device

One or more embodiments of this application further provide an electrochemical device including the negative electrode material of the foregoing embodiments.

In some embodiments, a compacted density of the negative electrode material ranges from 0.85 g/cm³ to 1.15 g/cm³. For example, the compacted density of the negative electrode material may be 0.85 g/cm³, 0.9 g/cm³, 0.95 g/cm³, 1.0 g/cm³, 1.05 g/cm³, 1.1 g/cm³, 1.15 g/cm³, or a range defined by any two of these values.

In some embodiments, an initial porosity of the negative electrode material ranges from 24.7% to 26.1%. For example, the initial porosity of the negative electrode material may be 24.7%, 24.8%, 25%, 25.2%, 25.4%, 25.6%, 25.8%, 26%, 26.1%, or a range defined by any two of these values.

In some embodiments, a porosity of the negative electrode material after 500 cycles ranges from 26.4% to 34.5%. For example, the porosity of the negative electrode material after 500 cycles may be 26.4%, 26.5%, 26.6%, 26.8%, 27%, 27.5%, 28%, 28.5%, 29%, 29.5%, 30%, 30.5%, 31%, 31.5%, 32%, 32.5%, 33%, 33.5%, 34%, 34.5%, or a range defined by any two of these values.

It can be understood that part of swelling of a cell is caused by the porosity of the negative electrode, and the porosity is caused by repeated expansion and contraction of the negative electrode material in the negative electrode. Due to the differences in silicon properties, different silicon-doped negative electrode materials have different porosity characteristics.

According to some embodiments of this application, the electrochemical device of this application includes but is not limited to: all types of primary batteries, secondary batteries, fuel batteries, solar batteries, or capacitors. In some embodiments, the electrochemical device is a lithium secondary battery. In some embodiments, the lithium secondary battery includes but is not limited to: a lithium metal secondary battery, a lithium-ion secondary battery, a lithium polymer secondary battery, or a lithium-ion polymer secondary battery.

In a specific example of this application, the electrochemical device is a lithium-ion battery, and the lithium-ion battery is not limited to any specific type in this application, and may be any type of lithium-ion battery, such as a button lithium-ion battery, a cylindrical lithium-ion battery, or a pouch lithium-ion battery.

The preparation process of the electrochemical device is well-known to those skilled in the art, and is not particularly limited in this application. For example, the preparation process may include but is not limited to the following steps: stacking a positive electrode plate, a separator, and a negative electrode plate in sequence, and performing winding, folding, or other operations as needed to obtain an electrode assembly of a wound structure, placing the electrode assembly into a packaging bag, injecting an electrolyte into the packaging bag, and sealing the packaging bag to obtain an electrochemical device; alternatively, stacking a positive electrode plate, a separator, and a negative electrode plate in sequence, then fixing four corners of the entire stacked structure with a tape to obtain an electrode assembly of a stacked structure, placing the electrode assembly into a packaging bag, injecting an electrolyte into the packaging bag, and sealing the packaging bag to obtain an electrochemical device. Additionally, overcurrent prevention elements, guide plates, and the like may be placed in the packaging bag as needed to prevent pressure rise, overcharge, and overdischarge inside the electrochemical device. The packaging bag is not particularly limited in this application, and those skilled in the art can make selections according to actual requirements, as long as the objectives of this application can be achieved. For example, aluminum-plastic film packaging bags can be used.

### IV. Electronic device

One or more embodiments of this application further provide an electronic device, where the electronic device of this application may be any device using the electrochemical device of the foregoing embodiments.

In some embodiments, the electronic device of this application includes but is not limited to: notebook computers, pen-input computers, mobile computers, e-book players, portable phones, portable fax machines, portable copiers, portable printers, head-mounted stereo headsets, video recorders, LCD TVs, portable cleaners, portable CD players, mini discs, transceivers, electronic notebooks, calculators, memory cards, portable recorders, radios, backup power supplies, motors, automobiles, motorcycles, assisted bicycles, bicycles, lighting appliances, toys, game consoles, clocks, electric tools, flashlights, cameras, large household storage batteries, or lithium-ion capacitors.

Below, this application will be further specifically described with examples and comparative examples, and this application is not limited to these examples as long as the essence of this application is not departed from.

### Examples and comparative examples

### Example 1

### <Preparation of negative electrode plate>

### 1. Formation of porous silicon-carbon particles

500 g of a porous carbon matrix was added to a fluidized bed, 10 L/min of nitrogen was introduced to bring the porous carbon matrix to a fluidized state, and the fluidized bed was heated to 500°C. After the temperature was stable, 3 L/min of monosilane was introduced for 6 min, the monosilane was thermally cracked to form silicon particles deposited on an inner wall surface of pores of the porous carbon matrix or an outer surface of the porous carbon matrix; and subsequently, the fluidized bed was heated to a temperature of 1000°C and maintained at the temperature for 1 h to cause the silicon particles to react with the porous carbon matrix to form silicon carbide, so as to form a first silicon carbide layer on the inner wall surface of the pores of the porous carbon matrix and form a second silicon carbide layer on the outer surface of the porous carbon matrix. The fluidized bed was cooled to a temperature of 500°C, and 3 L/min of monosilane was still introduced for 105 min, and the monosilane was thermally cracked to form silicon particles deposited on a surface of the second silicon carbide layer. Subsequently, 5 L/min of acetylene gas was introduced for 3 h, forming a carbon particle coating layer, where the carbon particle coating layer covered the second silicon carbide and silicon particles located on a surface of the second silicon carbide.

### 2. Formation of negative electrode plate

An active material with a mixed gram capacity of 420 mAh/g (formed by mixing porous silicon-carbon particles and graphite at a mass ratio of 5:95), carbon nanotubes, lithium carboxymethyl cellulose, and lithium polyacrylate were mixed at a mass ratio of 97.4:0.2:0.4:2, an appropriate amount of solvent deionized water was added, and a negative electrode slurry was obtained under the action of a vacuum mixer, where a solid content of the negative electrode slurry was 46 wt%. The negative electrode slurry was uniformly applied onto one surface of a negative electrode current collector copper foil, and the copper foil was dried at 80°C to obtain a negative electrode plate with one surface coated with a negative electrode material layer, with a coating thickness of 40 µm. The foregoing steps were repeated on the other surface of the copper foil to obtain a negative electrode plate with two surfaces coated with negative electrode material layers. Then, after cold pressing, cutting, and slitting, a negative electrode plate with specifications of 661 mm × 78 mm was obtained.

### <Preparation of positive electrode plate>

A positive electrode active material LiCoO₂, conductive carbon black, and a binder polyvinylidene fluoride were mixed at a mass ratio of 96.7:1.7:1.6, N-methylpyrrolidone (NMP) was added, and a positive electrode slurry was obtained under the action of a vacuum mixer, where a solid content of the positive electrode slurry was 76 wt%. The positive electrode slurry was uniformly applied onto one surface of a positive electrode current collector aluminum foil with a thickness of 9 µm, the aluminum foil was dried at 120°C to obtain a positive electrode plate with one surface coated with a positive electrode material layer, with a coating thickness of 45 µm. The above steps were repeated on the other surface of the aluminum foil to obtain a positive electrode plate with two surfaces coated with positive electrode material layers. Then, after cold pressing, cutting, and slitting, a positive electrode plate with specifications of 661 mm × 76.5 mm was obtained.

### <Preparation of electrolyte>

In an argon atmosphere glove box with a water content of less than 10 ppm, FEC, EC, PC, EMC, and DEC were mixed at a mass ratio of 5:10:15:20:50 to obtain an organic solvent, and then a lithium salt LiPF₆ was added to the organic solvent to obtain an electrolyte. A mass percentage of the lithium salt was 12.5%.

### <Separator>

A porous polyethylene film with a thickness of 10 µm was used.

### <Preparation of lithium-ion battery>

The prepared positive electrode plate, separator, and negative electrode plate were stacked in sequence, so that the separator was sandwiched between the positive electrode plate and the negative electrode plate for separation. Then winding was performed to obtain an electrode assembly. The electrode assembly was placed into an aluminum-plastic film packaging bag and dried. Then the electrolyte was injected, followed by processes such as vacuum packaging, standing, formation, degassing, and trimming to obtain a lithium-ion battery.

### Example 2

Example 2 differed from Example 1 only in that the fluidized bed was heated to 500°C, and after the temperature was stable, 3 L/min of monosilane was introduced for 4 min, with the remaining steps being the same as in Example 1.

### Example 3

Example 3 differed from Example 1 only in that the fluidized bed was heated to 500°C, and after the temperature was stable, 3 L/min of monosilane was introduced for 2 min, with the remaining steps being the same as in Example 1.

### Example 4

Example 4 differed from Example 1 in that the fluidized bed was heated to 500°C, and after the temperature was stable, 3 L/min of monosilane was introduced for 160 min, the monosilane was thermally cracked to form silicon particles deposited on an inner wall surface of pores of the porous carbon matrix or an outer surface of the porous carbon matrix; subsequently, the fluidized bed was heated to a temperature of 550°C and maintained at the temperature for 1 h to cause some of the deposited silicon particles to react with the porous carbon matrix to form silicon carbide, so as to form a first silicon carbide layer on the inner wall surface of the pores of the porous carbon matrix and form a second silicon carbide layer on the outer surface of the porous carbon matrix.

The remaining steps were the same as in Example 1.

### Example 5

Example 5 differed from Example 4 in that the fluidized bed was heated to a temperature of 575°C and maintained at the temperature for 1 h to cause some of the deposited silicon particles to react with the porous carbon matrix to form silicon carbide, so as to form a first silicon carbide layer on the inner wall surface of the pores of the porous carbon matrix and form a second silicon carbide layer on the outer surface of the porous carbon matrix.

The remaining steps were the same as in Example 4.

### Example 6

Example 6 differed from Example 4 in that the fluidized bed was heated to a temperature of 600°C and maintained at the temperature for 1 h to cause some of the deposited silicon particles to react with the porous carbon matrix to form silicon carbide, so as to form a first silicon carbide layer on the inner wall surface of the pores of the porous carbon matrix and form a second silicon carbide layer on the outer surface of the porous carbon matrix.

The remaining steps were the same as in Example 4.

### Example 7

At room temperature, 1000 g of a porous carbon matrix was immersed in 5 L dimethyl dimethoxysilane ethanol solution with a volume concentration of 1% for 5 h, the porous carbon matrix adsorbing silicon-containing molecules was filtered and dried in a vacuum oven at a temperature of 60°C for 24 h, then the powder was calcined at 1000°C for 2 h in a box furnace filled with an argon atmosphere, and after cooling, a porous silicon-carbon particle material modified with silicon carbide was obtained. 500 g of the porous silicon-carbon particle material was added to a fluidized bed, 10 L/min of nitrogen was introduced to bring the porous silicon-carbon particle material to a fluidized state, and the fluidized bed was heated to 500°C. After the temperature was stable, 3 L/min of monosilane was introduced for 130 min, and the monosilane was thermally cracked to form silicon particles deposited on an inner wall surface of pores of the porous carbon matrix or an outer surface of the porous carbon matrix. Subsequently, 5 L/min of acetylene gas was introduced for 3 h to form a carbon particle coating layer, where the carbon particle coating layer covered the second silicon carbide and silicon particles located on a surface of the second silicon carbide.

The remaining steps were the same as in Example 1.

### Example 8

Example 8 differed from Example 7 only in that, during formation of the porous silicon-carbon particle material, the volume concentration of the dimethyl dimethoxysilane ethanol solution was 2%.

The remaining steps were the same as in Example 7.

### Example 9

Example 9 differed from Example 7 only in that, during formation of the porous silicon-carbon particle material, the volume concentration of the dimethyl dimethoxysilane ethanol solution was 3%.

The remaining steps were the same as in Example 7.

### Comparative Example 1

500 g of a porous carbon matrix was added to a fluidized bed, 10 L/min of nitrogen was introduced to bring the porous carbon matrix to a fluidized state, and the fluidized bed was heated to 500°C. After the temperature was stable, 3 L/min of monosilane was introduced for 130 min, the monosilane was thermally cracked to form silicon particles deposited on an inner wall surface of pores of the porous carbon matrix or an outer surface of the porous carbon matrix. Subsequently, 5 L/min of acetylene gas was introduced for 3 h.

The remaining steps were the same as in Example 1.

### Comparative Example 2

Comparative Example 2 differed from Comparative Example 1 in that, after the porous silicon-carbon particle material was prepared, the obtained porous silicon-carbon particle material was immersed in a nano-silicon carbide dispersion solution with a mass concentration of 2%, where a particle size of silicon carbide was 100 nm, and the dispersion solution was a polyacrylic acid with a mass concentration of 0.5%. After a period of time, silicon-carbon powder was filtered and dried to obtain a silicon-carbon powder material with silicon carbide attached to the surface.

The remaining steps were the same as in Comparative Example 1.

### Comparative Example 3

Comparative Example 3 differed from Example 1 in that the fluidized bed was heated to 500°C, and after the temperature was stable, 3 L/min of monosilane was introduced for 20 min, the monosilane was thermally cracked to form silicon particles deposited on an inner wall surface of pores of the porous carbon matrix or an outer surface of the porous carbon matrix; subsequently, the fluidized bed was heated to a temperature of 1000°C and maintained at the temperature for 1 h to cause the deposited silicon particles to react with the porous carbon matrix to form silicon carbide, so as to form a first silicon carbide layer on the inner wall surface of the pores of the porous carbon matrix and form a second silicon carbide layer on the outer surface of the porous carbon matrix. The fluidized bed was cooled to a temperature of 500°C, 3 L/min of monosilane was still introduced for 140 min, and the monosilane was thermally cracked to form silicon particles deposited on a surface of the second silicon carbide.

The remaining steps were the same as in Example 1.

### Test methods:

### Cell cycling test:

At a test temperature of 25°C, a cell was charged at a constant current of 0.7C to 4.50 V, charged at a constant voltage to 0.025C, left standing for 5 minutes, and then discharged at 0.5C to 3.0 V. A capacity obtained in this step was taken as an initial capacity, and a cycling test was performed, in which the cell was charged at 0.7C /discharged at 0.5C, and a capacity degradation curve was obtained based on a ratio of a capacity of each step to the initial capacity.

### Swelling rate test for fully-charged cell

At a position where an aluminum tab was embedded in the cell, a screw micrometer was used to perform measurement three times to obtain an average value as the thickness of the cell. The thickness of a fresh cell charged to 3.85 V during formation was measured as the initial thickness. When the cell was subjected to a specific number of charge and discharge cycles, the cell was in a fully-charged state at 4.5 V, then the screw micrometer was used to measure the thickness of the cell at that time, and a ratio of this thickness to the initial thickness was taken as a swelling rate of the fully-charged cell at that time.

### Powder particle size test:

A particle size distribution of the powder was tested using a laser diffraction method. A 50 ml beaker was taken, 0.2 g of a sample was added, 2 drops of a 1 wt% P-40 surfactant were added, and after gentle shaking, 20 ml water was added. The sample was ultrasonically dispersed for 5 minutes using a 120 W ultrasonic cleaner to obtain a sample dispersion solution. The sample dispersion solution was tested using a MasterSizer 2000 to obtain the Dᵥ50 and Dᵥ99 of the sample. Dᵥ50 means that 50% of the particles by volume have a diameter greater than this value, and another 50% of the particles by volume have a diameter less than this value. Dᵥ99 means that 90% of the particles by volume have a diameter less than this value. Dₙ10 means that 10% of the particles by number have a diameter less than this value.

### Powder silicon content test:

0.1 g of a sample was weighed and added to a PTFE beaker, and 10 mL nitric acid was added dropwise, and heated for digestion. Another 10 mL nitric acid was added dropwise, and was heated for digestion again. After cooling, the digested solution was filtered to remove filter residue, and the volume was made up to 100 mL in a volumetric flask. The prepared solution was added to an atomization chamber and tested using inductively coupled plasma emission spectroscopy.

### Powder XRD test:

A sample holder, glass slide, and spatula used for sample preparation were taken, an appropriate amount of powder was placed in a groove of the sample holder, the sample was spread flatly with the spatula, and the sample surface was lightly pressed with the glass slide to make the powder surface flush with the sample holder surface. A test radiation source was a Cu target material, with a tube voltage of 40 kV, a tube current of 30 mA, a scanning speed of 8 degrees/min, and a 20 range of 10 degrees to 80 degrees.

### Powder gram capacity test:

A preparation method of a silicon-carbon negative electrode was as follows: A silicon-carbon powder material, a conductive agent (SP), a binder (SBR), CNT, and a dispersant (CMC) were mixed at a mass ratio of 84:10%:5%:0.4%:0.6%, and deionized water was added to control the solid content to be 48%. A resulting slurry was mixed uniformly and applied onto a copper foil, and after drying, cold pressing, and punching, a silicon-carbon negative electrode plate was obtained. In a glove box in which a water content and an oxygen content were both less than 10 ppm, ethyl methyl carbonate (EMC), ethylene carbonate (EC), and diethyl carbonate (DEC) were mixed at a volume ratio of 1:1:1, then fluoroethylene carbonate (FEC) accounting for 10% of a volume of the resulting solvent mixture was added, and ultimately LiPF₆ was added to obtain an electrolyte with a lithium salt concentration of 1 mol/L. In a glove box in which the water content and the oxygen content were both less than 10 ppm, the silicon-carbon negative electrode plate, a lithium metal counter electrode, a PP separator, and the above electrolyte were assembled into a CR2430 button cell. A gram capacity test was performed in an environment at 25°C, the button cell was left standing for 6 h, discharged at a current of 0.05C to 5 mV, then discharged at 50 mA to 5 mV, left standing for 5 min, and then discharged at 10 mA to 5 mV. The cell was left standing for 5 min, and then charged at a rate of 0.05C to 2.0 V. Initial coulombic efficiency of silicon-carbon negative electrode material = first charge capacity / first discharge capacity.

### Porosity test for negative electrode plate

A sample used for preparation was taken, and the negative electrode plate was punched into discs with a diameter of 10 mm, where the negative electrode plate after cycling was cleaned with dimethyl carbonate (DMC) and vacuum-dried before punching. An apparent volume V1 of the disc was calculated based on the thickness and diameter. Forty punched discs were taken, and a true volume V2 of each disc was precisely measured according to the Archimedes principle of gas displacement (density = mass / volume) and the Boyle's law (PV=nRT) for small-molecule-diameter helium under certain conditions. The porosity of the electrode plate was calculated according to the formula Porosity = (V2 - V1) × V1 × 100%.

### Specific surface area test for porous silicon-carbon particles:

2.0 g of a sample was weighed and placed in a sample tube, the sample tube was installed at a degassing station port, a heating temperature was set to 200°C for degassing for 120 min, a certain amount of nitrogen was introduced into the sample tube, and an adsorption partial pressure was directly measured by controlling an equilibrium pressure in the sample tube, with an adsorption amount at that partial pressure point being obtained according to a gas state equation. During the measurement, the adsorption equilibrium pressure was gradually increased by gradually adding an adsorbate gas, to ultimately obtain an adsorption isotherm. The adsorbate gas was gradually discharged to reduce the adsorption equilibrium pressure to obtain the desorption isotherm. Parameters such as a pore size, a specific surface area, and a pore volume of the material were calculated according to the BJH (Barrett-Joyner-Halenda) theory.

### Micropore proportion test for porous carbon matrix:

An adsorption-desorption isotherm test method for the porous carbon matrix was the same as that for the porous silicon-carbon particles, then a total pore volume V1 of the porous carbon matrix and a pore volume V2 of micropores with a pore diameter less than 2 nm were analyzed using a density functional theory (DFT) method, and a ratio of V2/V1 was used as a micropore proportion of the porous carbon matrix.

### Thickness test for carbon particle coating layer:

A thickness of the carbon coating layer on the surface of the material particles was determined using high-resolution TEM combined with corresponding EDS images. Since the carbon particle coating layer did not contain silicon, a carbon layer on the particle surface without silicon could be considered as the carbon particle coating layer, and thicknesses of five points were measured to obtain an average value as a thickness value of the carbon particle coating layer.

### Compacted density test for negative electrode material:

1.0 g of a material powder sample was placed in a compression mold with a diameter of 13 mm, then pressed using an electronic pressure testing machine, with a pressure controlled to be 5 t, a pressing displacement rate controlled to be 10 mm/min, and a pressure applying and holding time controlled to be 30 s. After pressure holding, the pressure was released at a pressure release displacement rate of 30 mm/min, and a compacted density of the material was calculated according to r = m/V based on a volume of the material after pressure release.

**Table 1**

| Group | I₁/I₂ | Silicon content | Compacted density (g/cm³) | Gram capacity (mAh/g) | Initial coulombic efficiency | Capacity retention rate after 500 cycles | Thickness swelling rate after 500 cycles |
|---|---|---|---|---|---|---|---|
| Example 1 | 0.37 | 38.5% | 0.98 | 1580.2 | 89.9% | 92.8% | 9.20% |
| Example 2 | 0.18 | 37.1% | 0.98 | 1587.7 | 90.1% | 92.2% | 9.37% |
| Example 3 | 0.025 | 36.6% | 0.97 | 1566 | 90.3% | 91.7% | 9.44% |
| Example 4 | 0.032 | 45.3% | 1.11 | 1975.9 | 91.7% | 92.0% | 9.86% |
| Example 5 | 0.21 | 45.6% | 1.14 | 1971.8 | 91.5% | 91.5% | 9.88% |
| Example 6 | 0.47 | 45.2% | 1.16 | 1969.1 | 91.2% | 91.1% | 9.92% |
| Example 7 | 0.055 | 41.7% | 1.04 | 1669.8 | 90.7% | 92.2% | 9.58% |
| Example 8 | 0.087 | 42.6% | 1.05 | 1664.1 | 90.3% | 93.0% | 9.55% |
| Example 9 | 0.109 | 43.1% | 1.07 | 1657.7 | 90.2% | 93.5% | 9.42% |
| Comparative Example 1 | / | 40.50% | 1.03 | 1673 | 91.10% | 86.0% | 10.01% |
| Comparative Example 2 | 0.5 | 41.30% | 1.05 | 1668.5 | 84.90% | 87.1% | 9.90% |
| Comparative Example 3 | 0.67 | 49.80% | 1.2 | 1688.2 | 76.20% | 87.4% | 9.54% |

In Examples 1, 2, and 3, different amounts of silicon particles were introduced into the porous carbon matrix through thermal cracking of silane, followed by high-temperature treatment to cause the silicon particles to react with the porous carbon matrix to form silicon carbide. Since the contents of the silicon particles used to form silicon carbide in the three examples decrease sequentially, the contents of silicon carbide also decrease sequentially. As compared to Comparative Example 1, in Examples 1 to 3, due to the formation of silicon carbide, silicon carbide is formed in situ at the silicon particle/porous carbon matrix interface, acting to connect the porous carbon matrix and silicon particles, thereby significantly increasing the cycling capacity retention rate of the lithium battery and significantly reducing the cycling swelling rate.

In Examples 4, 5, and 6, a large amount of silicon particles were introduced into the porous carbon matrix through thermal cracking of silane, followed by formation of silicon carbide under a relatively low-temperature condition. Silicon carbide can still be formed in situ at the silicon particle/porous carbon matrix interface, acting to connect the porous carbon matrix and silicon particles. Additionally, with change of the heat treatment temperature, a thickness of a silicon carbide interface layer can be controlled, thereby regulating the material properties. As compared to Comparative Example 1, the cycling capacity retention rate of the lithium battery in Examples 4 to 6 is significantly increased, and the cycling swelling rate is significantly reduced.

In Examples 7, 8, and 9, organosilane molecules were first adsorbed in the porous carbon matrix, followed by high-temperature treatment to convert the organosilane molecules into silicon carbide. The content of the silicon carbide was adjusted by controlling the concentration of organosilane molecules. During subsequent silane deposition, the silicon particles formed by thermally cracking were directly adsorbed on the surface of the silicon carbide rather than the surface of the carbon material. As compared to Comparative Example 1, the cycling capacity retention rate of the lithium battery in Examples 7 to 9 is significantly increased, and the cycling swelling rate is significantly reduced.

It can be seen that forming a silicon carbide layer at the interface between the silicon particles and the porous carbon matrix allows silicon carbide to connect the porous carbon matrix and the silicon particles, reducing or even preventing the detachment of the silicon particles, thereby improving the cycling performance of the lithium battery. Additionally, such effect can be achieved by using different preparation methods to form the silicon carbide layer.

From Table 1, it is found that as the content of the silicon carbide decreases, the value of I₁/I₂ also decreases, this is because I₁ corresponds to the characteristic diffraction peak of the silicon carbide, and the intensity of this peak weakens as the content of the silicon carbide decreases.

As the content of the silicon carbide increases, the compacted density of the silicon-carbon material increases, this is because an increase in the amount of the silicon carbide in the porous carbon matrix causes an increase in the mass of the material with the same volume.

As the content of the silicon carbide increases, the initial coulombic efficiency and gram capacity of the material slightly decrease, this is because the poor ion conductivity of the silicon carbide causes some intercalating lithium ions to fail to deintercalate in time.

As the content of the silicon carbide increases, both the capacity retention rate and the swelling rate of the cell after 500 cycles show an improving trend, this is because the silicon carbide interface layer can prevent silicon from detaching from the surface of the porous carbon matrix during lithium intercalation deformation, and the silicon carbide has a certain restraining effect on a volume change of silicon particles.

In Comparative Example 1, there is no silicon carbide, so there is no silicon carbide peak at the I₁ position, and thus no I₁/I₂ value exists. Due to the absence of silicon carbide with poor ion conductivity, the gram capacity and initial coulombic efficiency are slightly higher than those in Examples 7 to 9. However, due to the lack of a bridging and buffering effect of silicon carbide, the capacity retention rate and swelling rate of the cell are deteriorated to some extent.

In Comparative Example 2, the introduced silicon carbide particles are too large, leading to an increase in amount of irreversible lithium ions, and the silicon carbide cannot act as an interface layer between silicon and the porous carbon matrix, resulting in deterioration of the both performance of the material and the performance of the cell to some extent.

In Comparative Example 3, 10% of silicon carbide is introduced, and a large amount of silicon carbide deteriorates the ion and electron transport performance of the material, causing significant deterioration of the performance of the material and the performance of the cell. However, due to the enhanced restraining effect, the swelling rate of the cell is effectively reduced.

**Table 2**

| Group | Porosity of negative electrode plate before cycling | Porosity of negative electrode plate after 500 cycles |
|---|---|---|
| Example 1 | 25.2% | 26.4% |
| Example 2 | 24.9% | 27.0% |
| Example 3 | 25.8% | 28.3% |
| Example 4 | 21.9% | 31.6% |
| Example 5 | 22.2% | 32.2% |
| Example 6 | 22.8% | 34.5% |
| Example 7 | 23.9% | 31.3% |
| Example 8 | 24.5% | 30.9% |
| Example 9 | 24.7% | 27.7% |
| Comparative Example 1 | 23.8% | 35.2% |
| Comparative Example 2 | 24.1% | 33.3% |
| Comparative Example 3 | 23.5% | 30.5% |

Referring to Tables 1 and 2, since the mixed gram capacity of the negative electrode is constant at 420 mAh/g, the irreversible lithium intercalation behavior of silicon carbide reduces the gram capacity of the silicon-carbon negative electrode to some extent, so a higher gram capacity of the material in the examples and comparative examples results in a lower mixing proportion of porous silicon-carbon particles in the negative electrode. Since the density of porous silicon-carbon particles is less than that of graphite, a higher content of silicon results in a large volume of the electrode plate, ultimately leading to the phenomenon that a higher gram capacity of silicon-carbon results in a larger porosity of the negative electrode plate before cycling. By controlling relative contents of silicon carbide and silicon, the relationship between gram capacity and porosity can be achieved, thereby improving the overall performance of the lithium-ion battery.

Referring to Table 2, the porosity of the negative electrode plate after cycling increases with the increase in the thickness swelling rate of the cell, this is because the thickness swelling of the cell is mainly caused by the negative electrode plate, and an increase in the swelling rate leads to larger gaps between particles in the negative electrode coating, and a larger swelling rate of the cell results in a larger porosity of the negative electrode plate. The porous silicon-carbon particles of this application can utilize the pores of the porous carbon matrix to limit the expansion of silicon particles, thereby alleviating the increase in the porosity of the negative electrode plate caused by repeated expansion and contraction of the negative electrode material.

Although illustrative embodiments have been shown and described, those skilled in the art should understand that the above embodiments are not to be construed as limiting this application, and changes, substitutions, and modifications may be made to some embodiments without departing from the spirit, principles, and scope of this application, and these changes, substitutions, and modifications also fall within the protection scope of this application.

## Claims

1. A negative electrode material, comprising porous silicon-carbon particles, wherein the porous silicon-carbon particle comprises a porous carbon matrix, a first silicon carbide layer located on an inner wall surface of pores of the porous carbon matrix, and a first silicon particle layer located on a side surface of the first silicon carbide layer facing away from the inner wall surface; and the porous carbon matrix, the first silicon carbide layer, and the first silicon particle layer are connected through Si-C covalent bonds.

2. The negative electrode material according to claim 1, wherein the porous silicon-carbon particle satisfies at least one of the following conditions:
(a) based on a weight of the porous silicon-carbon particle, a mass fraction of the silicon element ranges from 32 wt% to 60 wt%; or
(b) in an X-ray diffraction pattern of the porous silicon-carbon particle, a peak intensity I₁ of a diffraction peak of silicon carbide at 20 of 35.6° ± 0.5° and a peak intensity I₂ of a diffraction peak of silicon at 2θ of 28.5° ± 0.5° satisfy a mathematical relationship: 0.025 < I₁/I₂ < 0.47.

3. The negative electrode material according to claim 1, wherein the porous silicon-carbon particle satisfies at least one of the following conditions:
(c) a pore volume of the pores of the porous carbon matrix ranges from 0.6 cm³/g to 1.1 cm³/g; or
(d) a volume proportion of micropores in the pores of the porous carbon matrix is greater than or equal to 70%, the micropores being pores with a diameter less than 2 nm.

4. The negative electrode material according to claim 1, wherein the porous silicon-carbon particle further satisfies at least one of the following conditions:
(e) a volume distribution of the porous silicon-carbon particle satisfies that Dᵥ50 ranges from 5 µm to 8 µm and Dᵥ99 ranges from 15 µm to 20 µm, and a number distribution of the porous silicon-carbon particle satisfies that Dₙ10 ranges from 0.5 µm to 1 µm; or
(f) a specific surface area of the porous silicon-carbon particle ranges from 0.5 m²/g to 12 m²/g.

5. The negative electrode material according to any one of claims 1 to 3, wherein the porous silicon-carbon particle further satisfies at least one of the following conditions:
(g) the porous silicon-carbon particle further comprises a second silicon carbide layer located on an outer surface of the porous silicon-carbon and a second silicon particle layer located on a side surface of the second silicon carbide layer facing away from the outer surface; and the porous carbon matrix, the second silicon carbide layer, and the second silicon particle layer are connected through Si-C covalent bonds;
(h) the porous silicon-carbon particle further comprises a carbon particle coating layer, and the carbon particle coating layer covers the second silicon carbide layer and the second silicon particle layer located on the side surface of the second silicon carbide layer facing away from the outer surface;
(i) a thickness of the carbon particle coating layer ranges from 2 nm to 20 nm; or
(j) based on a weight of the porous silicon-carbon particle, a mass fraction of the carbon particle coating layer ranges from 1.3 wt% to 3.2 wt%.

6. An electrochemical device, comprising the negative electrode material according to any one of claims 1 to 5.

7. The electrochemical device according to claim 6, wherein the negative electrode material satisfies at least one of the following conditions:
(k) a compacted density of the negative electrode material ranges from 0.85 g/cm³ to 1.15 g/cm³;
(l) an initial porosity of the negative electrode material ranges from 24.7% to 26.1%; or
(m) a porosity of the negative electrode material after 500 cycles ranges from 26.4% to 34.5%.

8. An electronic device, comprising the electrochemical device according to any one of claim 6 or 7.

9. A preparation method of a negative electrode material, used for forming the negative electrode material according to any one of claims 1 to 5, and comprising the following steps:
step 1, providing a porous carbon matrix, and forming a first silicon carbide layer on an inner wall surface of pores of the porous carbon matrix; and
step 2, forming a first silicon particle layer on a side surface of the first silicon carbide layer facing away from the porous carbon matrix, wherein the porous carbon matrix, the first silicon carbide layer, and the first silicon particle layer are connected through Si-C covalent bonds.

10. The preparation method of a negative electrode material according to claim 9, wherein in step 1, the forming a first silicon carbide layer on an inner wall surface of pores of the porous carbon matrix comprises the following steps:
step a, adding the porous carbon matrix to a fluidized bed, introducing a protective gas to bring the porous carbon matrix to a fluidized state, heating the fluidized bed to a pretreatment temperature, and then introducing a first silicon source gas so that the first silicon source gas is thermally cracked to form silicon particles deposited on the inner wall surface of the pores of the porous carbon matrix, thereby forming the silicon particles; and
step b, performing a first heating treatment on the porous carbon matrix and the silicon particles to cause the silicon particles to react with the porous carbon matrix to form silicon carbide, so as to form the first silicon carbide layer on the inner wall surface of the pores of the porous carbon matrix.

11. The preparation method of a negative electrode material according to claim 10, wherein in step a, the pretreatment temperature ranges from 450°C to 500°C; the protective gas comprises nitrogen; a flow velocity of the protective gas ranges from 5 L/min to 20 L/min; the first silicon source gas comprises at least one of monosilane, disilane, or trisilane; and a flow velocity of the first silicon source gas ranges from 1 L/min to 5 L/min.

12. The preparation method of a negative electrode material according to claim 10, wherein in step a, a duration of introducing the first silicon source gas ranges from 1 min to 10 min; and
in step b, a temperature of the first heating treatment ranges from 550°C to 1000°C, and a duration ranges from 10 min to 2 h.

13. The preparation method of a negative electrode material according to claim 10, wherein in step a, a duration of introducing the first silicon source gas ranges from 60 min to 300 min; and
in step b, a temperature of the first heating treatment ranges from 550°C to 650°C, and a duration ranges from 10 min to 2 h.

14. The preparation method of a negative electrode material according to claim 9, wherein in step 1, the forming a first silicon carbide layer on an inner wall surface of pores of the porous carbon matrix comprises the following step:
step c, immersing the porous carbon matrix in a silicon-containing solution to allow the porous carbon matrix to adsorb the silicon-containing solution, then performing a drying treatment on the porous carbon matrix after adsorption to remove a solvent, and after the drying treatment, performing a calcination treatment on the porous carbon matrix to form the first silicon carbide layer on the inner wall surface of the pores of the porous carbon matrix.

15. The preparation method of a negative electrode material according to claim 14, wherein a solute of the silicon-containing solution comprises silicon-containing molecules soluble in an organic solvent, such as dimethyl dimethoxysilane, methyl trimethoxysilane, tetramethoxysilane, or methyl triethoxysilane; a solvent of the silicon-containing solution comprises organic solvents such as ethanol, methanol, isopropanol, acetone, or tetrahydrofuran; a duration of the immersion ranges from 2 h to 10 h; a temperature of the calcination treatment ranges from 700°C to 1200°C; and a duration of the calcination ranges from 1 h to 3 h.

16. The preparation method of a negative electrode material according to any one of claims 9 to 15, wherein step 2 comprises the following steps: placing the porous carbon matrix processed in step 1 in a fluidized bed, heating the fluidized bed to a post-treatment temperature, and introducing a second silicon source gas so that the second silicon source gas is thermally cracked to form silicon particles deposited on a side surface of the first silicon carbide layer facing away from the porous carbon matrix, to form the first silicon particle layer.

17. The preparation method of a negative electrode material according to claim 16, wherein the post-treatment temperature ranges from 450°C to 500°C; a flow velocity of the second silicon source gas ranges from 1 L/min to 5 L/min; a duration of introducing the second silicon source gas ranges from 20 min to 360 min; and the second silicon source gas comprises at least one of monosilane, disilane, or trisilane.

18. The preparation method according to any one of claims 9 to 15, wherein step 1 further comprises forming a second silicon carbide layer on an outer surface of the porous carbon matrix, and the second silicon carbide layer and the first silicon carbide layer are formed simultaneously based on a same method; step 2 further comprises forming a second silicon particle layer on a side surface of the second silicon carbide layer facing away from the porous carbon matrix, and the first silicon particle layer and the second silicon particle layer are formed simultaneously based on a same method;
the preparation method further comprising: step 3, forming a carbon particle coating layer, wherein the carbon particle coating layer covers the second silicon carbide layer and the second silicon particle layer; and
the step of forming the carbon particle coating layer comprising: after step 2, heating the fluidized bed to a temperature ranging from 500°C to 650°C, and introducing a carbon source gas to thermally crack the carbon source gas to form carbon particles deposited on a side surface of the second silicon carbide layer and the second silicon particle layer facing away from the porous carbon matrix, wherein a flow velocity of the carbon source gas ranges from 0.5 L/min to 6 L/min, a duration of introducing the carbon source gas ranges from 60 min to 360 min, and the carbon source gas comprises at least one of acetylene, ethylene, propylene, propane, or methane.
